# EUROPÄISCHE PATENTANMELDUNG

(11) **EP 3 936 016 A1**
(43) Veröffentlichungstag der Anmeldung: **12.01.2022**
(21) Anmeldenummer: 20184886.8
(22) Anmeldetag: 09.07.2020
(51) Int. Cl.: A47J 43/25

(54) **SPEISENZUBEREITUNGSGERÄT ZUM SCHNEIDEN VON LEBENSMITTELN**

(71) Anmelder: Vorwerk & Co. Interholding GmbH, 42270 Wuppertal (DE)
(72) Erfinder: Thies, Felix, 42115 Wuppertal (DE); Landsecker, Kai, 40213 Düsseldorf (DE); Tepel, Phillipp, 42349 Wuppertal (DE)
(74) Vertreter: Gille Hrabal Partnerschaftsgesellschaft mbB Patentanwälte

(57) **Zusammenfassung**

Die Erfindung betrifft ein Speisenzubereitungsgerät (1) mit einem drehbaren Zerkleinerungswerkzeug (4) zum Zerkleinern von Speisen mit einer Steuerungseinheit. Das Zerkleinerungswerkzeug ist in Bezug zu einem Gefäß (2) derart angeordnet oder anordbar, dass mittels des Zerkleinerungswerkzeugs (4) zerkleinerte Speisen schwerkraftbedingt nach unten transportiert werden, um im Gefäß (2) aufgefangen zu werden. Weiterhin betrifft die Erfindung ein Verfahren zum Zerkleinern einer Speise unter Nutzung eines Speisenzubereitungsgeräts (1), ein Computerprogrammprodukt sowie eine Verwendung eines Zerkleinerungsaufsatzes (20). Ein Speisenzubereitungsgerät (1) umfasst eine Steuerungseinheit, die dazu eingerichtet ist, unter Berücksichtigung einer bereitgestellten Information einen Soll-Parameter (12) eines Zerkleinerungsprozesses einer Speise mittels des Zerkleinerungswerkzeugs (4) festzulegen. Auf diese Weise wird ein besonders gutes und reproduzierbares Zerkleinerungsergebnis erzielt.

## Beschreibung

Die Erfindung betrifft ein Speisenzubereitungsgerät mit einem drehbaren Zerkleinerungswerkzeug zum Zerkleinern von Speisen mit einer Steuerungseinheit. Das Zerkleinerungswerkzeug ist in Bezug zu einem Gefäß derart angeordnet oder anordbar, dass mittels des Zerkleinerungswerkzeugs zerkleinerte Speisen schwerkraftbedingt nach unten transportiert werden, um im Gefäß aufgefangen zu werden. Weiterhin betrifft die Erfindung ein Verfahren zum Zerkleinern einer Speise unter Nutzung eines Speisenzubereitungsgeräts, ein Computerprogrammprodukt sowie eine Verwendung eines Zerkleinerungsaufsatzes.

Speisenzubereitungsgeräte, die der Zerkleinerung von Speisen dienen, sind bekannt. Beispielsweise sind Speisenzubereitungsgeräte verfügbar, die mehrere unterschiedliche Speisenzubereitungsverfahren wie Zerkleinern, Mischen und Erhitzen ermöglichen, auch als AII-in-one-Food-Prozessoren bezeichnet. Auch Zusatzgeräte für Küchenmaschinen sind bekannt, die das Schneiden von Speisen erlauben. In beiden Fällen haben die Geräte eine nicht oder nur in groben Stufen einstellbare Drehzahl. Die Verarbeitung der Speisen bzw. die Einstellung des jeweiligen Verarbeitungsprozesses erfolgt üblicherweise unabhängig vom Schnittgut. Darüber hinaus sind Küchenroboter bekannt, also digital unterstützte Speisenzubereitungsgeräte, die den Benutzer durch digitale Rezepte führen können. Auch diese erlauben das Zerkleinern von Speisen.

Typischerweise erfolgt das Zerkleinern von Speisen abhängig von Erfahrungen des Benutzers. Die Einstellung der relevanten Zerkleinerungsparameter wie Schnittgeschwindigkeit, Vorschubkraft etc. ist entweder nicht oder nur basierend auf Nutzererfahrungen oder Herstellerangaben einstellbar. Darunter leidet das Ergebnis, wenn beispielsweise weiche Speisen wie Bananen mit denselben Parametern zerkleinert werden wie harte oder zähe Speisen wie Süßkartoffeln. Auch sind falsche Einstellungen durch den Benutzer möglich, die das Ergebnis beeinträchtigen. Häufig werden weiche Lebensmittel etwa mit zu hoher Vorschubkraft dem Zerkleinerungswerkzeug zugeführt und dadurch zerstört.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, ein weiterentwickeltes Speisenzubereitungsgerät, ein Verfahren, ein Computerprogrammprodukt sowie eine Verwendung bereitzustellen.

Zur Lösung der Aufgabe dient ein Speisenzubereitungsgerät gemäß Anspruch 1 sowie ein Verfahren zum Zerkleinern einer Speise, ein Computerprogrammprodukt und eine Verwendung gemäß den Nebenansprüchen. Vorteilhafte Ausführungsformen ergeben sich aus den Unteransprüchen.

Zur Lösung der Aufgabe dient ein Speisenzubereitungsgerät mit einem drehbaren Zerkleinerungswerkzeug zum Zerkleinern von Speisen. Das Zerkleinerungswerkzeug ist relativ zu einem Gefäß derart angeordnet oder anordbar, dass eine Speise nach der Zerkleinerung mittels des Zerkleinerungswerkzeugs schwerkraftbedingt nach unten fällt, um im Gefäß aufgefangen zu werden. Das Speisenzubereitungsgerät weist eine Steuerungseinheit auf, die dazu eingerichtet ist, unter Berücksichtigung einer bereitgestellten Information einen Soll-Parameter eines Zerkleinerungsprozesses einer Speise mittels des Zerkleinerungswerkzeugs festzulegen.

Die Steuerungseinheit ermöglicht durch die Festlegung des Soll-Parameters eine Vorgabe von relevanten Informationen für den aktuellen Zerkleinerungsprozess. Diese sind nutzbar, um jeden Zerkleinerungsprozess individuell an die konkreten Gegebenheiten anzupassen. Auf diese Weise wird ein besonders gutes und reproduzierbares Zerkleinerungsergebnis erzielt. Konkrete Eigenschaften der zu zerkleinernden Speise, auch als Schnittgut bezeichnet, finden Berücksichtigung. So können weiche Lebensmittel beispielsweise mit geringerer Vorschubkraft zerkleinert werden als harte. Die Abhängigkeit des Zerkleinerungsergebnisses von äußeren Einflüssen bzw. Fehlerquellen wie beispielsweise dem Verhalten des Benutzers und der Beschaffenheit des Schnittgutes wird minimiert. Die Benutzerfreundlichkeit wird weiter erhöht.

Ein Speisenzubereitungsgerät ist ein Gerät, mit dem zumindest ein Schritt einer Speisenzubereitung erfolgen kann, wie beispielsweise Mischen, Zerkleinern oder Erhitzen. Eine Speise kann fest oder flüssig sein. Auch eine einzige Zutat bzw. eine Menge einer Zutat, beispielsweise eine Kartoffel oder 500 g Möhren, ist eine Speise im Sinne der vorliegenden Erfindung.

Das Zerkleinerungswerkzeug ist in Bezug zu dem Gefäß insbesondere derart angeordnet oder anordbar, dass Speisen beim Eintritt in das Gefäß mittels des Zerkleinerungswerkzeugs zerkleinert werden. Das Speisenzubereitungsgerät kann das Gefäß umfassen. Nach der Zerkleinerung fällt eine Speise schwerkraftbedingt nach unten, um im Gefäß aufgefangen zu werden. Somit passiert die Speise das Zerkleinerungswerkzeug, um anschließend unterhalb davon aufgefangen zu werden. Die Speise passiert das Zerkleinerungswerkzeug nur einmal, sodass ein besonders definierter Zerkleinerungsprozess möglich ist. Eine Küchenmaschine mit einem in einem Speisenzubereitungsgefäß drehbaren Schneidwerkzeug, das nahe beim Grund des Speisenzubereitungsgefäß angeordnet ist, ist kein anspruchsgemäßes Zerkleinerungswerkzeug. Durch Drehen eines solchen Schneidwerkzeugs kann Speise auch entgegengesetzt zur Schwerkraft gefördert und zerkleinert werden. Ein solches Schneidwerkzeug ist daher dazu bestimmt und geeignet, dass eine Speise das Schneidwerkzeug mehrmals passiert, um zerkleinert zu werden.

Insbesondere weist das Zerkleinerungswerkzeug einen Abstand von mindestens 10cm, insbesondere mindestens 15cm, von einem Boden des Gefäßes auf. Gemessen wird der Abstand zwischen dem tiefsten Punkt des Bodens und dem tiefsten Punkt des Zerkleinerungswerkzeugs. Zerkleinerte Speisen fallen somit wenigstens 10 cm herab.

Das Speisenzubereitungsgerät kann ein Speisenzubereitungsgefäß aufweisen. Dieses kann zur Durchführung eines Speisenzubereitungsvorgangs eingerichtet sein, bei dem eine Speise beispielsweise mittels eines Elements zum Mischen und/oder Zerkleinern verarbeitet werden kann und/oder mittels eines Heizelements erhitzt werden kann. Das Gefäß kann als Aufsatz zur Anordnung in diesem Speisenzubereitungsgefäß eingerichtet sein. Dies meint, dass es von oben in bzw. auf dem Speisenzubereitungsgefäß positioniert und ggf. arretiert werden kann. Dies geschieht in der Regel manuell. Mit anderen Worten ist das Gefäß lösbar und zwar in der Regel manuell. Das Gefäß ist insbesondere reversibel an bzw. auf dem Speisenzubereitungsgefäß anbringbar. Das Gefäß kann ein Aufsatz in der Art eines Deckels für das Speisenzubereitungsgefäß sein. In dieser Ausführungsform können zerkleinerte Speisen in dem Gefäß gesammelt werden, das im bzw. oberhalb des Speisenzubereitungsgefäßes angeordnet ist. Das Gefäß kann eine mittig und/oder senkrecht verlaufende Öffnung aufweisen, durch welche eine Antriebswelle des Speisenzubereitungsgeräts hindurch verlaufen kann, um das Zerkleinerungswerkzeug anzutreiben. Das Speisenzubereitungsgerät kann so ausgestaltet sein, dass im derart positionierten Zustand des Gefäßes eine Antriebswelle durch das Speisenzubereitungsgefäß hindurch verläuft, um mittels einem unterhalb des Speisenzubereitungsgefäßes befindlichen Motors das Zerkleinerungswerkzeug anzutreiben.

Das Gefäß kann alternativ das Speisenzubereitungsgefäß des Speisenzubereitungsgerätes selbst sein. Auch in diesem Fall ist das Zerkleinerungswerkzeug oberhalb eines Bodens zum Auffangen der zerkleinerten Speisen angeordnet, sodass diese schwerkraftbedingt nach unten fallen und dort aufgefangen werden können. Typischerweise ist das Zerkleinerungswerkzeug hierbei in einem Gehäuseteil angeordnet, der mantelförmig ausgestaltet ist bzw. einen im Wesentlichen kreisringförmigen Querschnitt aufweist, sodass zerkleinerte Speisen durch das Gehäuseteil hindurch schwerkraftbedingt unmittelbar in das Speisenzubereitungsgefäß gelangen und dort aufgefangen werden. Dieses Gehäuseteil kann wie oben beschrieben als Aufsatz zur Anordnung im Speisenzubereitungsgefäß ausgestaltet sein. Insofern wird auf die obigen Ausführungen verwiesen. Hierbei ist es möglich, die Speisen unmittelbar weiterzuverarbeiten.

Das Zerkleinerungswerkzeug weist insbesondere mindestens eine Schneide zum Zerkleinern auf, beispielsweise durch Scheiden und/oder Reiben. Das Zerkleinerungswerkzeug kann eine Schneidscheibe bzw. Reibscheibe sein. Es kann längliche, im Wesentlichen radial angeordnete Klingen zum Schneiden von Scheiben, beispielsweise von Kartoffeln aufweisen. Es kann alternativ oder zusätzlich lokal begrenzte und mit einer Klinge versehene Vertiefungen bzw. Mulden, beispielsweise zum Reiben von Gemüse, aufweisen. Dabei kann die Funktion abhängig von der Drehrichtung der Scheibe sein. Das Zerkleinerungswerkzeug kann Teil eines Zerkleinerungsaufsatzes sein.

Die bereitgestellte Information ist eine der Steuerungseinheit bereitgestellte bzw. zur Verfügung stehende Information. Insbesondere ist eine Information bezüglich des aktuellen Zerkleinerungsprozesses gemeint. Die Information kann beispielsweise eine Eingabe eines Benutzers, ein Sensorsignal eines Sensors, eine in einer internen oder verbundenen Datenbank bereitstehende Information oder eine aus einer oder mehreren dieser Informationen abgeleitete Information sein. Das Festlegen unter Berücksichtigung der bereitgestellten Information lässt grundsätzlich zu, dass dabei weitere Informationen Berücksichtigung finden können. Insbesondere kann die Steuerungseinheit den Soll-Parameter während des Zerkleinerungsprozesses festlegen.

Ein Soll-Parameter meint einen Soll-Wert eines Parameters. Ein Soll-Parameter eines Zerkleinerungsprozesses meint insbesondere einen für einen aktuellen Zerkleinerungsprozess optimalen Soll-Wert eines Parameters. Dieser ist dafür vorgesehen, den Zerkleinerungsprozess zu steuern bzw. zu regeln. Wird der Zerkleinerungsprozess durch den Soll-Parameter geregelt, so kann dadurch beispielsweise eine Schnittgeschwindigkeit des Zerkleinerungswerkzeugs eingestellt werden. Eine Schnittgeschwindigkeit hängt dann also von der bereitgestellten Information ab. Alternativ oder ergänzend kann eine Schnittkraft in Abhängigkeit von der bereitgestellten Information abhängen. Soll aufgrund der bereitgestellten Information eine Schnittkraft einen vorgegebenen Wert nicht übersteigen, dann wird die für den Betrieb des Zerkleinerungswerkzeugs zugeführte elektrische Leistung so geregelt, dass der vorgegebene Wert nicht überschritten wird.

Festlegen meint bestimmen bzw. definieren, beispielsweise durch Berechnen, Heraussuchen aus einer Datenbank, Zuordnen zu der bereitgestellten Information, etc. Der Soll-Parameter kann beispielsweise eine bestimmte Drehzahl des Zerkleinerungswerkzeugs sein. Die Steuerungseinheit kann diese Drehzahl beispielsweise der ihr bereitgestellten Information zuordnen, dass eine bestimmte zu zerkleinernde Speise vorliegt.

In einer Ausgestaltung weist das Speisenzubereitungsgerät ferner zumindest eines der folgenden Merkmale auf: ein Speisenzubereitungsgefäß, ein Heizelement zum Erhitzen einer Speise in dem Speisenzubereitungsgefäß, ein Mixwerkzeug zum Mischen und/oder Zerkleinern einer Speise in einem Bodenbereich des Speisenzubereitungsgefäßes, eine Antriebswelle zum Drehen des Mixwerkzeugs, einen Elektromotor zum Antrieb der Antriebswelle. Die Steuerungseinheit kann zur Steuerung eines Erhitzungsvorgangs einer Speise mittels des Heizelements eingerichtet sein. Im Betrieb kann eine Speise in das Speisenzubereitungsgefäß gegeben und die Speise in dem Speisenzubereitungsgefäß zubereitet werden. Zubereiten einer Speise bedeutet Verarbeiten durch Mischen, Zerkleinern und/oder Erhitzen.

Insbesondere ist das Speisenzubereitungsgefäß nicht identisch mit dem Gefäß. Auch im Speisenzubereitungsgefäß befindliche Speisen können mittels des Mixmessers zerkleinert werden. Diese fallen nach dem Zerkleinern allerdings nicht nach unten, um in dem Gefäß aufgefangen zu werden, sondern verbleiben im Speisenzubereitu ngsgefäß.

In einer weiteren Ausgestaltung ist der Soll-Parameter eine Soll-Schnittgeschwindigkeit, eine Soll-Schnittkraft, eine Soll-Vorschubgeschwindigkeit und/oder eine Soll-Vorschubkraft.

Die Schnittkraft bezieht sich auf die Kraft bzw. das Drehmoment, mit der das Zerkleinerungswerkzeug in Bezug zur zu zerkleinernden Speise bzw. in Bezug zum Gefäß bewegt wird. Die Schnittgeschwindigkeit bezieht sich auf die Geschwindigkeit, mit der das Zerkleinerungswerkzeug in Bezug zur zu zerkleinernden Speise bzw. in Bezug zum Gefäß bewegt wird. Da die Schnittkraft und die Drehzahl des Zerkleinerungswerkzeugs bzw. des Motors ineinander umgerechnet werden können, wird hier lediglich auf die Schnittkraft eingegangen. Alle Ausführungen gelten entsprechend für die Drehzahl des Zerkleinerungswerkzeugs bzw. Motors. Da das Schnittmoment und die Schnittkraft ineinander umgerechnet werden können, wird hier lediglich auf die Schnittkraft eingegangen. Alle Ausführungen gelten entsprechend für das Schnittmoment.

Die Vorschubgeschwindigkeit und die Vorschubkraft beziehen sich auf ein Zuführen zu zerkleinernden Speisen zum Zerkleinerungswerkzeug, insbesondere auf ein Einführen der zu zerkleinernden Speisen durch eine Öffnung in einem Deckel des Speisenzubereitungsgeräts. Dabei wirken Vorschubkraft und Vorschubgeschwindigkeit entlang der Vorschubrichtung, also der Richtung, mit der die zu zerkleinernde Speise bewegt wird. Die Vorschubrichtung ist vorzugsweise parallel zur Drehachse des Zerkleinerungswerkzeugs ausgerichtet.

In einer weiteren Ausgestaltung ist die Steuerungseinheit mit einer Datenbank verbunden oder verbindbar und dazu eingerichtet, zur Festlegung des Soll-Parameters zusätzlich zur bereitgestellten Information einen Inhalt der Datenbank zu berücksichtigen. Beispielsweise umfasst die Datenbank in einem einfachen Fall verschiedene Speisen und diesen zugeordnet jeweils eine geeignete Drehzahl für das Zerkleinerungswerkzeug zum Zerkleinern der Speise. Basierend auf der bereitgestellten Information betreffend die Art der zu zerkleinernden Speise sowie der Datenbank kann die Steuerungseinheit nun einen Soll-Parameter wie beispielsweise eine Soll-Drehzahl festlegen. Grundsätzlich wird dann während des Betriebs das Zerkleinerungswerkzeug mit dieser Soll-Drehzahl gedreht. Die Drehzahl des Zerkleinerungswerkzeugs kann aber beispielsweise bei Auftreten eines übermäßig hohen Widerstands dann geringer sein. Die Datenbank kann eine interne Datenbank sein, die in einer Speichereinheit des Speisenzubereitungsgeräts bzw. der Steuerungseinheit gespeichert ist. Alternativ kann die Datenbank eine externe Datenbank sein, auf welche die Steuerungseinheit über ein Datennetzwerk wie beispielsweise das Internet zugreifen kann. Diese Ausgestaltung ermöglicht ein noch besseres und reproduzierbares Zerkleinerungsergebnis.

In einer weiteren Ausgestaltung weist das Speisenzubereitungsgerät wenigstens einen Sensor auf. Die Steuerungseinheit ist dazu eingerichtet, unter Berücksichtigung eines Sensorsignals des Sensors den Soll-Parameter festzulegen. Der Sensor stellt der Steuerungseinheit ein Sensorsignal bereit. Dieses dient insbesondere als Information, die bereitgestellt wird. Der Sensor kann der Erfassung eines Sensorsignals bezüglich einer Eigenschaft der Speise und/oder eines Teils des Speisenzubereitungsgeräts dienen. Ein Sensorsignal kann ein insbesondere analoges Signal sein, dessen Spannung, Stromstärke und/oder Frequenz mit der gemessenen Größe korreliert. Beispielsweise kann die Steuerungseinheit basierend auf einem Sensorsignal eines Kraftsensors eine Soll-Drehzahl festlegen. Diese Ausgestaltung ermöglicht durch die Erfassung eines Sensorsignals ein besonders reproduzierbares Zerkleinerungsergebnis unter Berücksichtigung gemessener Eigenschaften.

In einer weiteren Ausgestaltung ist ein Sensor zur Erfassung einer auf einen Teil des Speisenzubereitungsgeräts ausgeübten Druckkraft und/oder eines Gewichts einer zerkleinerten Speise vorgesehen. Insbesondere umfasst das Speisenzubereitungsgerät den Sensor. Der Sensor kann als Kraftsensor zur Erfassung einer Gewichtskraft ausgestaltet sein. Der Sensor kann dazu eingerichtet sein, die Summe der Gewichtskraft des gesamten Speisenzubereitungsgefäßes oder von Teilen des Speisenzubereitungsgeräts sowie der zerkleinerten Speise zu erfassen. Das Gewicht der zerkleinerten Speise bezieht sich auf die in dem Gefäß angeordnete zerkleinerte Speise. Ein Sensor zur Erfassung einer Druckkraft meint einen Sensor, der zur Erfassung einer Information bezüglich einer Druckkraft geeignet ist. Dies gilt entsprechend für alle anderen Sensoren. In einer Ausgestaltung ist in zumindest einem Standfuß und insbesondere in jedem Standfuß des Speisenzubereitungsgeräts ein Sensor angeordnet.

Die Steuerungseinheit kann dazu eingerichtet sein, mittels Differenzbildung unter Abzug der bekannten Massen der relevanten Teile des Speisenzubereitungsgeräts das Gewicht der zerkleinerten Speise und/oder die ausgeübte Druckkraft zu bestimmen. Die Druckkraft wird insbesondere durch manuelles Drücken einer zu zerkleinernden Speise auf das Zerkleinerungswerkzeug, typischerweise die Schneidscheibe, erzeugt. Die Druckkraft kann proportional zur Vorschubgeschwindigkeit sein.

In einer weiteren Ausgestaltung ist die Steuerungseinheit dazu eingerichtet, basierend auf dem Sensorsignal einen Füllstand in dem Gefäß zu ermitteln. Zu diesem Zweck berücksichtigt die Steuerungseinheit insbesondere eine Information bezüglich der Dichte der zerkleinerten Speise. Diese kann beispielsweise die bereitgestellte Information sein oder auf dieser beruhen. Das Speisenzubereitungsgerät kann dazu eingerichtet sein, den Füllstand mittels einer Ausgabeeinrichtung auszugeben. Die Steuerungseinheit kann dazu eingerichtet sein, basierend auf dem Sensorsignal einen Füllstand in dem Speisenzubereitungsgefäß zu ermitteln. Der Füllstand kann sich auf feste oder flüssige Speisen oder Gemische davon beziehen.

Es sind als Fenster ausgestaltete Füllstandanzeigen bekannt. Bei Einsatzgeräten sind derartige Anzeigen aufgrund der undurchsichtigen Wandung des äußeren Gefäßes, hier des Speisenzubereitungsgefäßes, häufig nicht möglich. Diese Ausgestaltung der Erfindung bringt den Vorteil mit sich, dass durch die Füllstandsermittlung die Benutzerfreundlichkeit weiter erhöht wird.

In einer Ausführungsform ist ein Sensor zur Erfassung eines Motordrehmoments eines Motors zum Antrieb des Zerkleinerungswerkzeugs vorgesehen. Ein Sensor in diesem Zusammenhang ist eine Einrichtung, die geeignet ist, eine Information bezüglich eines Motordrehmoments zu erfassen. Der Sensor kann zwecks Erfassung des Motordrehmoments zur Erfassung eines Motorstroms des Motors ausgestaltet sein. Das Sensorsignal dieses Sensors kann als Information dienen. Das Speisenzubereitungsgerät kann den Sensor und/oder den Motor umfassen.

In einer Ausgestaltung ist das Speisenzubereitungsgerät dazu eingerichtet, eine Drehung des Zerkleinerungswerkzeugs auf Basis des Soll-Parameters zu beeinflussen, Damit kann der Zerkleinerungsprozess unter Berücksichtigung der Information gesteuert werden. Insbesondere ist die Steuerungseinheit dazu eingerichtet, die Drehung zu beeinflussen. Diese Ausgestaltung kann als direkte Steuerung bezeichnet werden, da das Speisenzubereitungsgerät direkt bzw. automatisch die Steuerung des Zerkleinerungsprozesses durchführt. Eine Beeinflussung der Drehung meint beispielsweise eine Änderung der Drehzahl und/oder des Drehmoments bzw. die Einstellung einer bestimmten Drehzahl und/oder eines bestimmten Drehmoments.

Bei einem Steuervorgang wird beispielsweise die Drehung des Zerkleinerungswerkzeugs durch den Soll-Parameter gezielt beeinflusst. Der Soll-Parameter wird in Abhängigkeit von einer empfangenen und/oder gemessenen Eingangsgröße, der bereitgestellten Information, festgelegt. Dies ermöglicht eine rasche und einfache Steuerung des Zerkleinerungsprozesses und somit eine verbesserte Benutzerfreundlichkeit.

In einer Ausführungsform ist die Steuerungseinheit dazu eingerichtet, die Drehung des Zerkleinerungswerkzeugs auf Basis des Soll-Parameters sowie einer erfassten Zustandsinformation bezüglich eines Ist-Zustands zu regeln. Die Steuerungseinheit dient der Festlegung des Soll-Parameters sowie der Beeinflussung der Drehung des Zerkleinerungswerkzeugs. Die Regelung der Drehung des Zerkleinerungswerkzeugs meint die Regelung zumindest eines Parameters der Drehung wie beispielsweise der Drehzahl oder des Drehmoments.

Bei einem Regelvorgang ist eine Regelgröße trotz eines Einwirkens einer Störgröße auf einem Soll-Wert zu halten. Der Soll-Wert wird durch den Soll-Parameter vorgegeben. Störgrößen können jegliche Umwelteinflüsse sein wie beispielsweise die ausgeübte Druckkraft auf die zu zerkleinernde Speise oder die Beschaffenheit der zu zerkleinernden Speise. Grundsätzlich wird bei einem Regeln ein Ist-Wert der Regelgröße bevorzugt kontinuierlich ermittelt. Insbesondere ist die Regelgröße eine Zustandsgröße, die einen aktuellen Zustand beschreibt, beispielsweise eine Drehzahl oder ein Drehmoment des Zerkleinerungswerkzeugs. Der Ist-Wert der Regelgröße beschreibt den aktuellen Zustand und wird repräsentiert durch die erfasste Zustandsinformation, etwa einem Sensorsignal. Der Ist-Zustand meint den aktuellen Zustand des Speisenzubereitungsgeräts, insbesondere während eines Zerkleinerungsprozesses. Diese Ausgestaltung bewirkt eine automatische und genaue Einstellung des Zerkleinerungsprozesses und somit ein besonders definiertes Zerkleinerungsergebnis und eine weiter verbesserte Benutzerfreundlichkeit.

In einer weiteren Ausgestaltung ist die Steuerungseinheit dazu eingerichtet, auf eine Kennlinie zuzugreifen und zur Festlegung des Soll-Parameters zusätzlich zur bereitgestellten Information die Kennlinie zu berücksichtigen. Die Kennlinie definiert einen Zusammenhang zwischen zwei physikalischen Größen im Betrieb. Beispielsweise definiert sie einen Zusammenhang zwischen der Drehzahl des Zerkleinerungswerkzeugs und der Druckkraft oder dem Schnittmoment. Liegt eine bereitgestellte Information vor, kann mittels der Kennlinie der Soll-Parameter bestimmt werden. Die bereitgestellte Information kann sich auf einen Ist-Zustand beziehen. Sie kann ein Sensorsignal sein wie z. B. eine aktuelle Motordrehzahl während eines Zerkleinerungsprozesses.

Zur Regelung der Drehung des Zerkleinerungswerkzeugs kann die Steuerungseinheit dazu eingerichtet sein, basierend auf der bereitgestellten Information und einer erfassten Zustandsinformation bezüglich eines Ist-Zustandes einen Datenpunkt zu ermitteln und diesen mit der Kennlinie zu vergleichen. Liegt der Punkt auf der Kennlinie bzw. innerhalb eines um die Kennlinie herum befindlichen Toleranzbereichs, entspricht der Ist-Parameter dem Soll-Parameter. Nun kann eine Ausgabe an den Benutzer erfolgen. Eine Beeinflussung der Drehung durch das Speisenzubereitungsgerät ist nicht notwendig, da die Drehzahl bereits optimal eigestellt ist. Liegt der Punkt außerhalb der Kennlinie bzw. außerhalb des Toleranzbereichs, weicht der Ist-Parameter vom Soll-Parameter ab. In diesem Fall kann eine entsprechende Ausgabe an den Benutzer oder eine Beeinflussung der Drehung durch das Speisenzubereitungsgerät erfolgen.

Die Kennlinie kann eine interne Kennlinie sein, die in einer Speichereinheit des Speisenzubereitungsgeräts bzw. der Steuerungseinheit gespeichert ist. Alternativ kann die Kennlinie eine externe Kennlinie sein, auf welche die Steuerungseinheit über ein Datennetzwerk wie beispielsweise das Internet zugreifen kann.

Für verschiedene Speisen können verschiedene Kennlinien vorhanden sein. Einer jeden Speise kann also eine eigene Kennlinie zugeordnet sein.

In einer weiteren Ausgestaltung ist die Steuerungseinheit dazu eingerichtet, über eine Ausgabeeinrichtung eine Ausgabeinformation bezüglich des Soll-Parameters an einen Benutzer auszugeben. Dies kann einer indirekten Steuerung dienen, bei welcher der Soll-Parameter von der Steuerungseinheit festgelegt und eine entsprechende Ausgabeinformation ausgegeben wird, die eigentliche Einstellung bzw. Beeinflussung aber durch den Benutzer erfolgt. Beispielsweise kann der Soll-Parameter selbst ausgegeben werden und als Basis zur Beeinflussung der manuell ausgeübten Druckkraft auf eine zerkleinernde Speise durch den Benutzer dienen. Der Benutzer kann somit ein Verhalten, beispielsweise die ausgeübte Druckkraft bei der Zuführung einer zu zerkleinernden Speise, als Reaktion auf die Ausgabe anpassen.

Eine Ausgabeinformation kann beispielsweise der Soll-Parameter selbst, ein von diesem abgeleiteter Wert wie etwa eine für den ermittelten Wert des Soll-Parameters geeignete Druckkraft oder eine auf dem Soll-Parameter oder einem abgeleiteten Wert beruhende Ausgabeinformation wie beispielsweise ein Warnhinweis oder ein Vorschlag für eine besser geeignete Größe des Parameters sein. Diese Ausgestaltung ermöglicht es, auch auf nicht von dem Gerät selbst einstellbare Parameter schnell und einfach Einfluss zu nehmen, um einen reproduzierbaren und zufriedenstellenden Zerkleinerungsprozess zu ermöglichen.

In einer Ausführungsform des Speisenzubereitungsgeräts ist die Steuerungseinheit dazu eingerichtet, zur Bestimmung der Ausgabeinformation bezüglich des Soll-Parameters eine erfasste Zustandsinformation eines Ist-Zustands zu berücksichtigen. Die Bestimmung der Ausgabeinformation meint die Festlegung derjenigen Information, die ausgegeben werden soll. Die erfasste Zustandsinformation des Ist-Zustands kann beispielsweise ein aktuelles Sensorsignal eines Sensors des Speisenzubereitungsgeräts sein. Auf diese Weise kann beispielsweise eine aktuelle Abweichung von dem Soll-Parameter ausgegeben werden. Die Reproduzierbarkeit der Zerkleinerung sowie die Benutzerfreundlichkeit werden dadurch weiter gesteigert.

In einer weiteren Ausgestaltung ist die Steuerungseinheit dazu eingerichtet, eine über eine Eingabeeinrichtung erfolgte Eingabe eines Benutzers als Information zu empfangen und auf Basis der empfangenen Eingabe den Soll-Parameter festzulegen. Die Eingabeeinrichtung kann am Speisenzubereitungsgerät angeordnet sein oder eine externe Eingabeeinrichtung sein. Die Eingabe des Benutzers kann beispielsweise eine Eingabe einer Information bezüglich einer zu zerkleinernden Speise oder eine Eingabe bezügliches eines Rezeptschrittes eines Rezeptes sein, auf das die Steuerungseinheit Zugriff hat.

Insbesondere umfasst das Speisenzubereitungsgerät eine Eingabeeinrichtung und/oder eine Ausgabeeinrichtung. Diese können gemeinsam als Ein- und Ausgabeeinrichtung ausgeführt sein, beispielsweise als Touchscreen.

In einer weiteren Ausgestaltung ist die Steuerungseinheit dazu eingerichtet, über eine Ausgabeeinrichtung Führungsinformationen an einen Benutzer auszugeben. Die Führungsinformationen dienen dazu, den Benutzer durch einzelne Vorbereitungs- und/oder Arbeitsschritte eines Speisenzubereitungsprozesses zu führen. Die Steuerungseinheit kann ferner dazu eingerichtet sein, über eine Eingabeeinrichtung Eingaben oder Befehle des Benutzers zu empfangen, beispielsweise die Bestätigung, dass eine bestimmte Menge einer Zutat hinzugefügt wurde, und die Führung durch den Speisenzubereitungsprozess entsprechend zu gestalten.

In einer weiteren Ausgestaltung ist das Zerkleinerungswerkzeug drehbar in einem Gehäuseteil angeordnet, weist das Speisenzubereitungsgerät einen Deckel zum Abdecken des Gehäuseteils mit einer Öffnung zum Einführen zu zerkleinernder Speisen auf und/oder ist das Zerkleinerungswerkzeug so angeordnet oder anordbar, dass durch die Öffnung eingeführte Speisen nach Passage des Zerkleinerungswerkzeugs in dem Gefäß aufgefangen werden.

Die Passage des Zerkleinerungswerkzeugs meint bei rotierendem Zerkleinerungswerkzeug insbesondere die Zerkleinerung durch das Zerkleinerungswerkzeug. Insbesondere ist das Zerkleinerungswerkzeug in einer Zerkleinerungswerkzeugebene angeordnet bzw. anordbar und die Passage des Zerkleinerungswerkzeugs meint die Passage der Zerkleinerungswerkzeugebene durch die Speise. Die Öffnung weist insbesondere die Form eines Stutzens auf. Sie kann durch einen Stößel verschließbar sein, der zum Hineindrücken der Speise ausgestaltet ist. Das Zerkleinerungswerkzeug kann beispielsweise eine Schneidscheibe sein.

Das Zerkleinerungswerkzeug ist in dem Gehäuseteil drehbar. Das Gehäuseteil dient der Einhausung des Zerkleinerungswerkzeugs. Insbesondere umfasst das Speisenzubereitungsgerät das Gehäuseteil. Das Zerkleinerungswerkzeug ist innerhalb des Gehäuseteils angeordnet oder anordbar. Das Gehäuseteil muss nicht vollständig verschlossen sein. Das Gehäuseteil kann Teil des Gefäßes sein, beispielsweise dessen oberer Rand.

Ein weiterer Aspekt der Erfindung ist ein Verfahren zum Zerkleinern einer Speise unter Nutzung eines Speisenzubereitungsgeräts mit einem drehbaren Zerkleinerungswerkzeug zum Zerkleinern von Speisen. Das Zerkleinerungswerkzeug ist relativ zu einem Gefäß derart angeordnet oder anordbar, dass eine Speise nach der Zerkleinerung mittels des Zerkleinerungswerkzeugs schwerkraftbedingt nach unten fällt, um im Gefäß aufgefangen zu werden. Mittels einer Steuerungseinheit wird unter Berücksichtigung einer bereitgestellten Information ein Soll-Parameter eines Zerkleinerungsprozesses einer Speise mittels des Zerkleinerungswerkzeugs festgelegt.

Insbesondere erfolgt das Verfahren unter Nutzung des erfindungsgemäßen Speisenzubereitungsgeräts. Die Merkmale, Ausführungsformen und Wirkungen des eingangs beschriebenen Geräts zur Lösung der Aufgabe beziehen sich entsprechend auch auf dieses Verfahren. Das Verfahren umfasst insbesondere ferner die Ausgabe einer Ausgabeinformation bezüglich des Soll-Parameters an einen Benutzer mittels einer Ausgabeeinrichtung und/oder die Beeinflussung einer Drehung des Zerkleinerungswerkzeugs auf Basis des Soll-Parameters durch die Steuerungseinheit. Das Verfahren kann die Regelung der Drehung des Zerkleinerungswerkzeugs auf Basis des Soll-Parameters durch die Steuereinheit umfassen. In einer Ausführungsform greift die Steuerungseinheit auf eine Kennlinie zu und berücksichtigt die Kennlinie zur Festlegung des Soll-Parameters.

Ein weiterer Aspekt der Erfindung ist ein Computerprogrammprodukt. Dieses umfasst Befehle, die bei einer Ausführung des Programms durch einen Computer diesen veranlassen, die Schritte des Verfahrens nach dem vorhergehenden Anspruch auszuführen. Der Computer ist insbesondere eine Steuerungseinheit eines Speisenzubereitungsgeräts. Die Merkmale, Ausführungsformen und Wirkungen des eingangs beschriebenen Geräts sowie des Verfahrens zur Lösung der Aufgabe beziehen sich entsprechend auch auf dieses Computerprogrammprodukt.

Ein weiterer Aspekt der Erfindung ist ein Speisenzubereitungsgerät mit einem in einem Gehäuseteil drehbaren Zerkleinerungswerkzeug zum Zerkleinern von Speisen, einer Steuerungseinrichtung und einem Sensor zur Erfassung einer auf einen Teil des Speisenzubereitungsgeräts ausgeübten Druckkraft und/oder eines Gewichts einer zerkleinerten Speise. Die Steuerungseinrichtung ist dazu eingerichtet, basierend auf dem Sensorsignal einen Füllstand in einem Gefäß oder einem Speisenzubereitungsgefäß zu ermitteln. Die Steuerungseinrichtung kann eine Steuerungseinheit gemäß den weiteren Aspekten der Erfindung sein. Die Merkmale, Ausführungsformen und Wirkungen des eingangs beschriebenen Geräts zur Lösung der Aufgabe beziehen sich entsprechend auch auf diesen Aspekt.

Ein weiterer Aspekt der Erfindung ist ein Speisenzubereitungsgerät mit einem Speisenzubereitungsgefäß, einem Heizelement zum Erhitzen einer Speise in dem Speisenzubereitungsgefäß, einem Mixwerkzeug zum Mischen und/oder Zerkleinern einer Speise in einem Bodenbereich des Speisenzubereitungsgefäßes, einer Antriebswelle zum Drehen des Mixwerkzeugs und einem Elektromotor zum Antrieb der Antriebswelle. Das Speisenzubereitungsgerät weist ferner einen Zerkleinerungsaufsatz mit einem drehbaren Zerkleinerungswerkzeug zum Zerkleinern von Speisen auf. Der Zerkleinerungsaufsatz kann manuell lösbar an bzw. auf dem Speisenzubereitungsgefäß angebracht werden. Vorzugsweise weist das Speisenzubereitungsgerät einen Adapter auf, der zur drehfesten Verbindung des Zerkleinerungswerkzeugs mit der Antriebswelle oder zumindest einem Teil des Mixwerkzeugs eingerichtet ist, sodass der Elektromotor das Zerkleinerungswerkzeug des Zerkleinerungsaufsatzes für ein Drehen antreibt.

Der Zerkleinerungsaufsatz ist insbesondere so ausgestaltet, dass das Zerkleinerungswerkzeug relativ zu einem Gefäß derart angeordnet oder anordbar ist, dass eine Speise nach der Zerkleinerung mittels des Zerkleinerungswerkzeugs schwerkraftbedingt nach unten fällt, um im Gefäß aufgefangen zu werden. Die Merkmale, Ausführungsformen und Wirkungen des eingangs beschriebenen Geräts zur Lösung der Aufgabe beziehen sich entsprechend auch auf diesen Aspekt.

Ein weiterer Aspekt ist die Verwendung eines Zerkleinerungsaufsatzes zum manuell lösbaren Anbringen an oder auf einem Speisenzubereitungsgefäß eines Speisenzubereitungsgeräts. Der Zerkleinerungsaufsatz umfasst ein drehbares Zerkleinerungswerkzeug zum Zerkleinern von Speisen. Das Zerkleinerungswerkzeug ist relativ zu einem Gefäß derart angeordnet oder anordbar, dass eine Speise nach Zerkleinerung mittels des Zerkleinerungswerkzeugs schwerkraftbedingt nach unten fällt, um im Gefäß aufgefangen zu werden. Das Speisenzubereitungsgerät umfasst zumindest eines der folgenden: das Speisenzubereitungsgefäß, ein Heizelement zum Erhitzen einer Speise in dem Speisenzubereitungsgefäß, ein Mixwerkzeug zum Mischen und/oder Zerkleinern einer Speise in einem Bodenbereich des Speisenzubereitungsgefäßes, eine Antriebswelle zum Drehen des Mixwerkzeugs, einen Elektromotor zum Antrieb der Antriebswelle. Das manuell lösbare Anbringen ist insbesondere ein manuelles, reversibles Verbinden, wobei die Verbindung manuell gelöst werden kann. Das Gefäß kann das Speisenzubereitungsgefäß oder ein separates Gefäß sein.

Die Erfindung betrifft also auch:
Verwendung eines Zerkleinerungsaufsatzes zum manuell lösbaren Anbringen an oder auf einem Speisenzubereitungsgefäß eines Speisenzubereitungsgeräts, wobei der Zerkleinerungsaufsatz ein drehbares Zerkleinerungswerkzeug zum Zerkleinern von Speisen umfasst, wobei das Zerkleinerungswerkzeug relativ zu einem Gefäß derart angeordnet oder anordbar ist, dass eine Speise nach der Zerkleinerung mittels des Zerkleinerungswerkzeugs schwerkraftbedingt nach unten fällt, um im Gefäß aufgefangen zu werden, wobei das Speisenzubereitungsgerät ein Heizelement zum Erhitzen einer Speise in dem Speisenzubereitungsgefäß, ein Mixwerkzeug zum Mischen und/oder Zerkleinern einer Speise in einem Bodenbereich des Speisenzubereitungsgefäßes, eine Antriebswelle zum Drehen des Mixwerkzeugs und einen Elektromotor zum Antrieb der Antriebswelle umfasst.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: eine schematische Explosionszeichnung eines Zerkleinerungsaufsatzes;
- Figur 2:: ein Ablaufdiagramm einer Benutzerführung des Speisenzubereitungsgeräts;
- Figur 3:: ein Ablaufdiagramm von Verfahrensschritten;
- Figur 4:: eine erste Kennlinie;
- Figur 5:: eine zweite Kennlinie;
- Figur 6:: eine schematische Darstellung eines Speisenzubereitungsgeräts

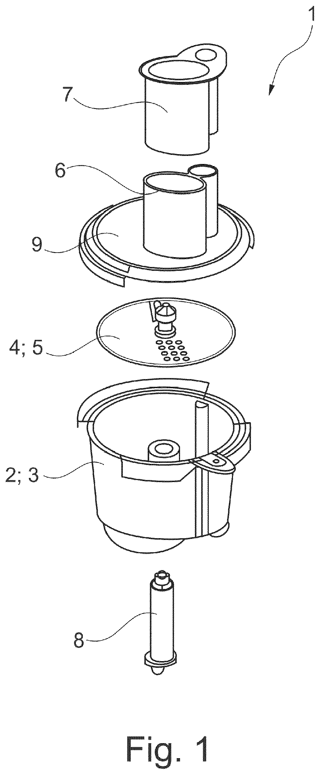

Figur 1 zeigt eine schematische Darstellung eines Zerkleinerungsaufsatzes als Teil eines erfindungsgemäßen Speisenzubereitungsgeräts 1. Im unteren Bereich ist ein Adapter 8 dargestellt, der der drehfesten Verbindung des Zerkleinerungswerkzeugs 4, hier ausgeführt als Schneidscheibe 5, mit der Antriebswelle oder mit zumindest einem Teil des Mixwerkzeugs dient. Auf diese Weise kann der (hier nicht dargestellte) Elektromotor des Speisenzubereitungsgeräts, der die Antriebswelle und damit das Mixwerkzeug des Speisenzubereitungsgeräts antreibt, auch zum rotatorischen Antrieb des Zerkleinerungswerkzeugs des Zerkleinerungsaufsatzes genutzt werden.

Der Adapter 8 ist als Welle ausgeführt und verläuft durch einen senkrechten Hohlraum im Inneren des Gefäßes 2. Er durchtritt das Gefäß 2 an der Oberseite des Hohlraums und ist dort mit der Schneidscheibe 5 verbindbar. Das Gefäß 2 hat einen W-förmigen Querschnitt und dient dem Auffangen geschnittener Speisen. Es ist als Aufsatz zur Anordnung in einem Speisenzubereitungsgefäß des Speisenzubereitungsgeräts 1 ausgestaltet. Der obere Bereich des Gefäßes 2 dient als Gehäuseteil 3 zur Einhausung der Schneidscheibe 5. Ein Deckel 9 deckt das Gefäß 2 ab und verschließt die Schneidscheibe gegenüber der Umgebung. Im Deckel 9 befinden sich zwei nebeneinander angeordnete, unterschiedliche große Öffnungen 6, die als Stutzen zum Einführen zu zerkleinernden Speisen ausgestaltet sind. Zugehörige und entsprechend dimensionierte, miteinander verbundene Stößel 7 dienen dem Hineindrücken der Speisen nach unten auf die Schneidscheibe 5.

Das Speisenzubereitungsgerät umfasst ferner eine (nicht dargestellte) Steuerungseinheit, die dazu eingerichtet ist, unter Berücksichtigung einer bereitgestellten Information über die zu zerkleinernde Speise, beispielsweise eines Datenbankinhalts oder eines Messwertes der Drehzahl sowie des Motorstroms zur Ermittlung der Leistungsaufnahme zwecks Errechnung des Drehmoments auf der Basis von Speiseneigenschaften einen Soll-Parameter eines Zerkleinerungsprozesses festzulegen, nämlich eine Soll-Vorschubkraft. Die Steuerungseinrichtung kann mittels eines Sensorsignals eines (ebenfalls nicht dargestellten) Druckkraftsensors im Inneren der Füße des Speisenzubereitungsgeräts die tatsächliche Vorschubkraft ermitteln. Dazu kann sie gemessene und bekannte Druckkraftwerte nutzen und durch Differenzbildung und ggf. Umrechnung die durch den Benutzer ausgeübte aktuelle Druckkraft ermitteln. Sie kann die Masse des Gefäßes bzw. Speisenzubereitungsgefäßes, der darin enthaltenen Speise und ggf. weiterer Teile des Speisenzubereitungsgerätes berücksichtigen. Die Masse der Speise kann beispielsweise aufgrund des hinterlegten Rezepts oder der Wägehistorie bekannt sein. Die aktuell ausgeübte Druckkraft kann mit dem Soll-Parameter verglichen werden. Ferner weist das Speisenzubereitungsgerät eine Ausgabeeinrichtung auf, mittels derer es Ausgabeinformationen bezüglich des Soll-Parameters an den Benutzer ausgeben kann, nämlich die Informationen: "Druck zu hoch", "Druck genau richtig" oder "Druck zu niedrig". Der Benutzer kann die Ausgabe wahrnehmen und seinen Druck auf die Speise entsprechend anpassen. Dies kann in sehr kurzen Zeitabschnitten wiederholt werden, sodass dem Benutzer eine Rückmeldung über die ausgeübte Druckkraft in Echtzeit zur Verfügung steht.

Es kann dem Benutzer durch eine Ausgabeeinheit der Soll-Parameter ausgegeben werden. Ebenso kann bei Abweichung des Ist-Wertes des entsprechenden Parameters vom Soll-Wert ein Hinweis ausgegeben werden. Dies erfolgt beispielsweise, wenn einer der Werte außerhalb eines vorbestimmten Toleranzbereiches des anderen Wertes ist, wenn also die Abweichung zu groß ist. Auch kann dem Benutzer ein Hinweis zum Ändern des Betriebsparameters ausgegeben werden oder ein Vorschlag mit einer momentan besser geeigneteren Größe des jeweiligen Parameters. Dies kann erfolgen, um das Zerkleinerungsergebnis zu verbessern und/oder um das Speisenzubereitungsgerät vor übermäßiger Belastung zu schützen. Zu diesem Zweck kann die Steuerungseinheit einen Inhalt einer verbundenen Datenbank berücksichtigen. Das Speisenzubereitungsgerät kann außerdem dazu eingerichtet sein, die Drehung des Zerkleinerungswerkzeugs zu beeinflussen, um den Zerkleinerungsprozess unter Berücksichtigung der Information zu steuern. In diesem Fall wird selbsttätig bzw. automatisch die Drehzahl angepasst, um den Ist-Wert dem Soll-Wert anzugleichen. Eine Interaktion des Benutzers ist in diesem Fall nicht notwendig.

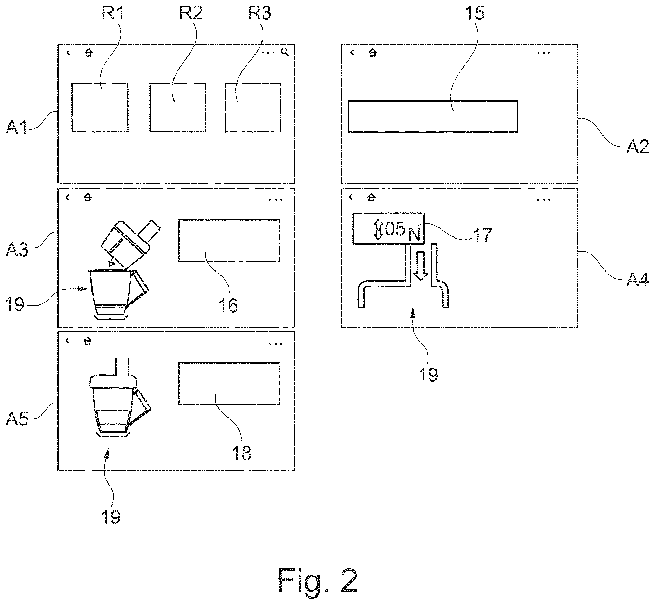

Figur 2 zeigt ein Ablaufdiagramm einer von der Steuerungseinheit auf der Ausgabeeinrichtung ausgegeben Benutzerführung des Speisenzubereitungsgeräts 1. Die Steuerungseinheit ist dazu eingerichtet, über die Ausgabeeinrichtung Führungsinformationen 16, 18 an einen Benutzer auszugeben, die dazu dienen, den Benutzer durch einzelne Vorbereitungs- und/oder Arbeitsschritte eines Speisenzubereitungsprozesses zu führen.

In einer ersten Ausgabe A1 stehen dem Benutzer mehrere in einer Datenbank hinterlegte elektronische Rezepte R1, R2, R3 zur Auswahl. Nach Auswahl eines ersten Rezeptes R1 erscheint in der zweiten Ausgabe A2 der Hinweis 15, dass der Zerkleinerungsaufsatz für das Speisenzubereitungsgerät 1 benötigt wird. In der dritten Ausgabe A3 wird dem Benutzer als erste Führungsinformation 16 angezeigt, dass der Zerkleinerungsaufsatz manuell an bzw. auf dem Speisenzubereitungsgefäß angebracht werden soll. Daneben ist ein Piktogramm 19 gezeigt, welches dieses bildlich darstellt. Bei dem hier zugrunde liegenden Gerät ist das Gehäuseteil zum Einhausen des Zerkleinerungswerkzeugs des Zerkleinerungsaufsatzes lediglich mantelartig ausgestaltet und weist keinen eigenen Boden zum Auffangen der Speisen auf, sodass zerkleinerten Speisen zwecks dortiger Weiterverarbeitung unmittelbar in das Speisenzubereitungsgefäß des Speisenzubereitungsgerätes fallen. Die vierte Ausgabe A4 zeigt eine Ausgabeinformation 17 bezüglich des Soll-Parameters, die unter Berücksichtigung wenigstens eines aktuellen Druckkraft-Messwertes von der Steuerungseinheit ausgegeben wird. Hier wird zunächst als Soll-Parameter eine Soll-Druckkraft in Newton angegeben. Anschließend signalisieren Pfeile eine zu hohe oder zu niedrige vom Benutzer ausgeübte Druckkraft. Zusätzlich zeigt ein Piktogramm 19 schematisch die Position, deren Druckkraft in der Ausgabeinformation 17 dargestellt ist. Die fünfte Ausgabe A5 zeigt eine zweite Führungsinformation 18, nämlich den Hinweis, dass 200 g Kartoffeln hinzuzufügen sind.

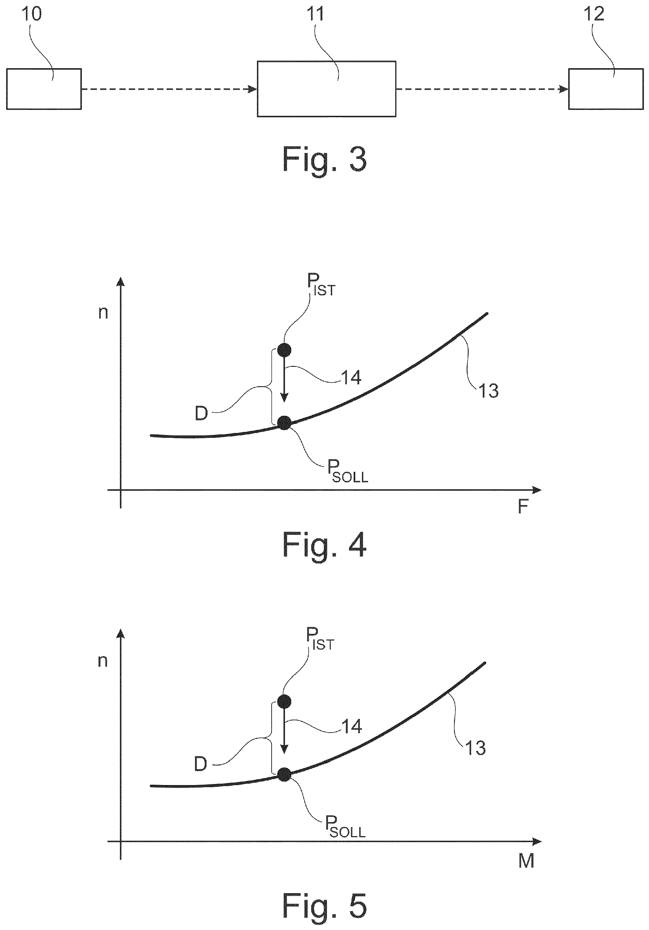

Figur 3 zeigt eine durch die Steuerungseinheit ausgeführte Festlegung des Soll-Parameters 12. Eine Eingabe 10, nämlich eine Eingabe bezüglich einer zu zerkleinernden Speise, wird der Steuerungseinheit bereitgestellt. Dies kann etwa durch das Rezept vorgegeben sein oder manuell vom Benutzer eingegeben worden sein. Es erfolgt ein Abgleich 11 mit einer Datenbank. Darin sind einzelne Speisen und zugeordnete Soll-Parameter angegeben. Die Steuerungseinheit sucht die Größe des passenden Soll-Parameters 12 heraus und legt diesen fest.

Figur 4 zeigt eine erste Kennlinie 13, Figur 5 zeigt eine zweite Kennlinie 13. In der Ausführungsform der Figur 4 definiert die in einem Druckkraft-Drehzahl-Diagramm dargestellte Kennlinie 13 einen Zusammenhang zwischen der Druckkraft F und der Drehzahl n des Zerkleinerungswerkzeugs, die ein Maß für die Schnittgeschwindigkeit ist. Die Druckkraft F oder Vorschubkraft meint typischerweise die Kraft, mit der eine zu zerkleinernde Speise entlang der Vorschubrichtung an das Zerkleinerungswerkzeug gedrückt wird. Sie kann proportional zur Vorschubgeschwindigkeit der zu zerkleinernden Speise sein und kann beispielsweise mithilfe eines Gewichtskraftsensors erfasst werden. Die Drehzahl n wird über die Motordrehzahl charakterisiert.

In einer anderen, in Figur 5 gezeigten Ausführungsform definiert die Kennlinie 13 einen Zusammenhang zwischen der Drehzahl n und dem Schnittmoment M. Das Schnittmoment M bezieht sich auf das Drehmoment des Zerkleinerungswerkzeugs in Bezug zur zu zerkleinernden Speise. Das Schnittmoment M ist proportional zum Motormoment und kann beispielsweise mithilfe eines Motorstromsensors erfasst werden.

In beiden der oben genannten Ausführungsformen wird während des Zerkleinerungsprozesses durch die Steuerungseinheit ein aktueller Betriebszustand ermittelt, indem die Motordrehzahl sowie die Druckkraft (z. B. über den Gewichtskraftsensor) oder das Schnittmoment (z. B. über den Motorstrom) gemessen werden. Somit wird ein aktueller Betriebspunkt P_{IST} ermittelt, der mit der Kennlinie 13 verglichen wird.

Der Soll-Betriebspunkt P_{SOLL} liegt auf der Kennlinie 13. Es wird eine Differenz D aus der Solldrehzahl gemäß der jeweiligen Kennlinie 13 und der gemessenen Drehzahl n ermittelt. Durch die Steuerungseinheit wird eine Beeinflussung 14 der Drehung des Zerkleinerungswerkzeugs auf Basis des Soll-Parameters realisiert, um den Zerkleinerungsprozess unter Berücksichtigung der Information zu regeln. Dazu wird die Drehzahl n hin zur Solldrehzahl verändert, so dass bei gleichbleibender Druckkraft F bzw. gleichbleibendem Schrittmoment M die Kennlinie 13 erreicht wird. Das Speisenzubereitungsgerät passt somit die Drehzahl an die vom Benutzer aktuell ausgeübte Druckkraft an. Eine Interaktion des Benutzers ist somit nicht erforderlich und der Zerkleinerungsprozess erfolgt im optimalen Bereich.

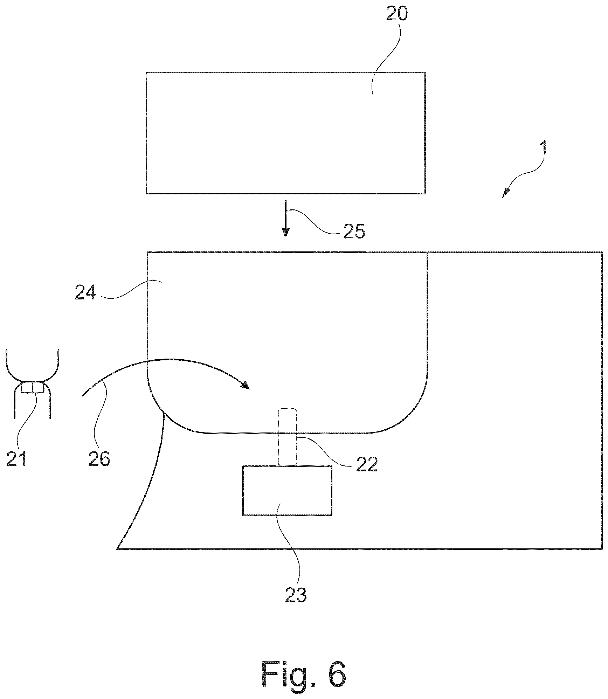

Figur 6 zeigt schematisch ein Speisenzubereitungsgerät 1. Dieses umfasst einen Elektromotor 23, eine mit diesem angetriebene Antriebswelle 22 und ein Speisenzubereitungsgefäß 24. Auf der im Speisenzubereitungsgefäß 24 freiliegenden Antriebswelle 22 kann das Mixwerkzeug 21 zum Zerkleinern und Mischen von Speisen im Speisenzubereitungsgefäß 24 angebracht werden, wie durch den Pfeil 26 angedeutet. Auf das Speisenzubereitungsgefäß 24 kann manuell der Zerkleinerungsaufsatz 20 aufgesetzt und befestigt werden, wie durch den Pfeil 25 angedeutet. Der hier lediglich als Umriss dargestellte Zerkleinerungsaufsatz 20 umfasst ein drehbares Zerkleinerungswerkzeug zum Zerkleinern von Speisen. Er umfasst insbesondere, wie in Figur 1 dargestellt, einen Adapter, mit welchem er mit dem Mixwerkzeug 21 oder mit der Antriebswelle 22 drehfest verbunden werden kann. Das Gefäß ist durch das manuelle Anbringen fest mit dem Speisenzubereitungsgefäß verbindbar. Die Drehachse des Zerkleinerungswerkzeugs entspricht der Drehachse der Antriebswelle 22 sowie des Mixwerkzeugs 21. Der Elektromotor 23 kann somit das Zerkleinerungswerkzeug des Zerkleinerungsaufsatzes 20 antreiben. Der Zerkleinerungsaufsatz 20 umfasst ferner ein Gefäß, wobei das Zerkleinerungswerkzeug relativ zum Gefäß derart angeordnet ist, dass eine Speise nach der Zerkleinerung mittels des Zerkleinerungswerkzeugs schwerkraftbedingt nach unten fällt, um im Gefäß aufgefangen zu werden, wie in Fig. 1 dargestellt.

### Bezugszeichenliste

| | |
|---|---|
| Speisenzubereitungsgerät | 1 |
| Gefäß | 2 |
| Gehäuseteil | 3 |
| Zerkleinerungswerkzeug | 4 |
| Schneidscheibe | 5 |
| Öffnung | 6 |
| Stößel | 7 |
| Adapter | 8 |
| Deckel | 9 |
| Eingabe | 10 |
| Abgleich | 11 |
| Soll-Parameter | 12 |
| Kennlinie | 13 |
| Beeinflussung | 14 |
| Hinweis | 15 |
| Erste Führungsinformation | 16 |
| Ausgabeinformation | 17 |
| Zweite Führungsinformation | 18 |
| Piktogramm | 19 |
| Zerkleinerungsaufsatz | 20 |
| Mixwerkzeug | 21 |
| Antriebswelle | 22 |
| Elektromotor | 23 |
| Speisenzubereitungsgefäß | 24 |
| Pfeil | 25 |
| Pfeil | 26 |
| Drehzahl | n |
| Druckkraft | F |
| Schnittmoment | M |
| Aktueller Betriebspunkt | P_{IST} |
| Soll-Betriebspunkt | P_{SOLL} |
| Differenz | D |
| Erste Ausgabe | A1 |
| Zweite Ausgabe | A2 |
| Dritte Ausgabe | A3 |
| Vierte Ausgabe | A4 |
| Fünfte Ausgabe | A5 |
| Erstes Rezept | R1 |
| Zweites Rezept | R2 |
| Drittes Rezept | R3 |

## Patentansprüche

1. Speisenzubereitungsgerät (1) mit einem drehbaren Zerkleinerungswerkzeug (4) zum Zerkleinern von Speisen, wobei das Zerkleinerungswerkzeug (4) relativ zu einem Gefäß (2) derart angeordnet oder anordbar ist, dass eine Speise nach der Zerkleinerung mittels des Zerkleinerungswerkzeugs (4) schwerkraftbedingt nach unten fällt, um im Gefäß (2) aufgefangen zu werden, **dadurch gekennzeichnet, dass** das Speisenzubereitungsgerät (1) eine Steuerungseinheit aufweist, die dazu eingerichtet ist, unter Berücksichtigung einer bereitgestellten Information einen Soll-Parameter (12) eines Zerkleinerungsprozesses einer Speise mittels des Zerkleinerungswerkzeugs (4) festzulegen.

2. Speisenzubereitungsgerät (1) nach dem vorhergehenden Anspruch, **dadurch gekennzeichnet, dass** das Speisenzubereitungsgerät (1) ferner ein Speisenzubereitungsgefäß (24), ein Heizelement zum Erhitzen einer Speise in dem Speisenzubereitungsgefäß (24), ein Mixwerkzeug zum Mischen und/oder Zerkleinern einer Speise in einem Bodenbereich des Speisenzubereitungsgefäßes (24), eine Antriebswelle (22) zum Drehen des Mixwerkzeugs und einen Elektromotor (23) zum Antrieb der Antriebswelle (22) aufweist.

3. Speisenzubereitungsgerät (1) nach einem der vorhergehenden Ansprüche, **dadurch gekennzeichnet, dass** der Soll-Parameter (12) eine Soll-Schnittgeschwindigkeit, eine Soll-Schnittkraft, eine Soll-Vorschubgeschwindigkeit und/oder eine Soll-Vorschubkraft ist.

4. Speisenzubereitungsgerät (1) nach einem der vorhergehenden Ansprüche, **dadurch gekennzeichnet, dass** die Steuerungseinheit mit einer Datenbank verbunden oder verbindbar ist und dazu eingerichtet ist, zur Festlegung des Soll-Parameters (12) zusätzlich zur bereitgestellten Information einen Inhalt der Datenbank zu berücksichtigen.

5. Speisenzubereitungsgerät (1) nach einem der vorhergehenden Ansprüche, **dadurch gekennzeichnet, dass** das Speisenzubereitungsgerät (1) wenigstens einen Sensor aufweist und die Steuerungseinheit dazu eingerichtet ist, unter Berücksichtigung eines Sensorsignals des Sensors den Soll-Parameter (12) festzulegen.

6. Speisenzubereitungsgerät (1) nach dem vorhergehenden Anspruch, **dadurch gekennzeichnet, dass** ein Sensor zur Erfassung einer auf einen Teil des Speisenzubereitungsgeräts (1) ausgeübten Druckkraft (F) und/oder eines Gewichts einer zerkleinerten Speise vorgesehen ist.

7. Speisenzubereitungsgerät (1) nach dem vorhergehenden Anspruch, **dadurch gekennzeichnet, dass** die Steuerungseinheit dazu eingerichtet ist, basierend auf dem Sensorsignal einen Füllstand in dem Gefäß (2) zu ermitteln.

8. Speisenzubereitungsgerät (1) nach einem der vorhergehenden Ansprüche, **dadurch gekennzeichnet, dass** das Speisenzubereitungsgerät (1) dazu eingerichtet ist, eine Drehung des Zerkleinerungswerkzeugs (4) auf Basis des Soll-Parameters (12) zu beeinflussen, um den Zerkleinerungsprozess unter Berücksichtigung der Information zu steuern,
wobei die Steuerungseinheit insbesondere dazu eingerichtet ist, die Drehung des Zerkleinerungswerkzeugs (4) auf Basis des Soll-Parameters (12) sowie einer erfassten Zustandsinformation bezüglich eines Ist-Zustands zu regeln.

9. Speisenzubereitungsgerät (1) nach einem der vorhergehenden Ansprüche, **dadurch gekennzeichnet, dass** die Steuerungseinheit dazu eingerichtet ist, auf eine Kennlinie (13) zuzugreifen und zur Festlegung des Soll-Parameters (12) zusätzlich zur bereitgestellten Information die Kennlinie (13) zu berücksichtigen.

10. Speisenzubereitungsgerät (1) nach einem der vorhergehenden Ansprüche, **dadurch gekennzeichnet, dass** die Steuerungseinheit dazu eingerichtet ist, über eine Ausgabeeinrichtung eine Ausgabeinformation (17) bezüglich des Soll-Parameters (12) an einen Benutzer auszugeben.

11. Speisenzubereitungsgerät (1) nach einem der vorhergehenden Ansprüche, **dadurch gekennzeichnet, dass** die Steuerungseinheit dazu eingerichtet ist, eine über eine Eingabeeinrichtung erfolgte Eingabe (10) eines Benutzers als Information zu empfangen und auf Basis der empfangenen Eingabe den Soll-Parameter (12) festzulegen.

12. Speisenzubereitungsgerät (1) nach einem der vorhergehenden Ansprüche, **dadurch gekennzeichnet, dass** die Steuerungseinheit dazu eingerichtet ist, über eine Ausgabeeinrichtung Führungsinformationen (16, 18) an einen Benutzer auszugeben, die dazu dienen, den Benutzer durch einzelne Vorbereitungs- und/oder Arbeitsschritte eines Speisenzubereitungsprozesses zu führen.

13. Speisenzubereitungsgerät (1) nach einem der vorhergehenden Ansprüche, **dadurch gekennzeichnet, dass** das Zerkleinerungswerkzeug (4) drehbar in einem Gehäuseteil (3) angeordnet ist, dass das Speisenzubereitungsgerät (1) einen Deckel (9) zum Abdecken des Gehäuseteils (2) mit einer Öffnung (6) zum Einführen zu zerkleinernder Speisen aufweist, und dass das Zerkleinerungswerkzeug (4) so angeordnet oder anordbar ist, dass durch die Öffnung (6) eingeführte Speisen nach Passage des Zerkleinerungswerkzeugs (4) in dem Gefäß (2) aufgefangen werden.

14. Verfahren zum Zerkleinern einer Speise unter Nutzung eines Speisenzubereitungsgeräts (1) mit einem drehbaren Zerkleinerungswerkzeug (4) zum Zerkleinern von Speisen, wobei das Zerkleinerungswerkzeug (4) relativ zu einem Gefäß (2) derart angeordnet oder anordbar ist, dass eine Speise nach der Zerkleinerung mittels des Zerkleinerungswerkzeugs (4) schwerkraftbedingt nach unten fällt, um im Gefäß aufgefangen zu werden, bei dem mittels einer Steuerungseinheit unter Berücksichtigung einer bereitgestellten Information ein Soll-Parameter (12) eines Zerkleinerungsprozesses einer Speise mittels des Zerkleinerungswerkzeugs (4) festgelegt wird.

15. Computerprogrammprodukt, umfassend Befehle, die bei einer Ausführung des Programms durch einen Computer, insbesondere durch eine Steuerungseinheit eines Speisenzubereitungsgeräts (1), diesen veranlassen, die Schritte des Verfahrens nach dem vorhergehenden Anspruch auszuführen.
